# EUROPÄISCHE PATENTSCHRIFT

(11) **EP 3 230 621 B1**
(45) Veröffentlichungstag und Bekanntmachung des Hinweises auf die Patenterteilung: **18.09.2019**
(21) Anmeldenummer: 15828643.5
(22) Anmeldetag: 11.12.2015
(51) Int. Cl.: F16F 15/139, F16D 13/68

(54) **DREHMOMENTÜBERTRAGUNGSEINRICHTUNG MIT STECKVERBINDUNG**
TORQUE TRANSMISSION DEVICE HAVING A PLUG-IN CONNECTION
DISPOSITIF DE TRANSMISSION DE COUPLE À CONNECTEUR

(30) Priorität: 12.12.2014 DE 102014225649
(43) Veröffentlichungstag der Anmeldung: 18.10.2017
(73) Patentinhaber: Schaeffler Technologies AG & Co. KG, 91074 Herzogenaurach (DE)
(72) Erfinder: GIRNUS, Mathias, 77815 Bühl (DE)
(86) Internationale Anmeldenummer: PCT/DE2015/200537
(87) Internationale Veröffentlichungsnummer: WO 2016/091261

(56) Entgegenhaltungen:
- EP-A1- 2 759 731
- DE-A1- 19 506 517
- DE-A1-102010 051 906

## Beschreibung

Die vorliegende Erfindung betrifft eine Drehmomentübertragungseinrichtung gemäß dem Oberbegriff des Patentanspruchs 1. Insbesondere betrifft die Erfindung eine Drehmomentübertragungseinrichtung, insbesondere für einen Antriebsstrang eines Kraftfahrzeugs mit einem eine Innenverzahnung aufweisenden Nabenteil und einem Wellenteil mit einer Außenverzahnung, wobei Innenverzahnung und Außenverzahnung eine Steckverbindung mit einem Drehschluss mit Zahnflankenspiel bilden.

Drehmomentübertragungseinrichtungen, beispielsweise Drehschwingungsdämpfer, Kupplungsaggregate wie Einfach- oder Doppelkupplungen können zur Drehkoppelung innerhalb ihrer Bauteile oder zur Koppelung untereinander Steckverbindungen mit einem Nabenteil und einem Wellenteil aufweisen, die zur Montage ineinander gesteckt sind. Zur Vereinfachung der Montage und Berücksichtigung von Bauteiltoleranzen weisen diese gegeneinander ein Zahnflankenspiel auf, welches bei schnellen Drehmomentrichtungswechseln, Drehschwingungen und dergleichen Geräusche verursachen können. Aus der DE 10 2010 051 906 A1 ist eine Drehmomentübertragungseinrichtung mit einer Steckverbindung bekannt, bei der zwischen dem Nabenteil und dem Wellenteil ein geräuschdämpfendes Reibmoment dem Zahnspiel der Steckverbindung überlagert ist.

Aus der EP 2 759 731 A1 ist eine Drehmomentübertragungseinrichtung bekannt, die auf den Oberbegriff des Patentanspruchs 1 lesbar ist.

Aufgabe der Erfindung ist die vorteilhafte Weiterbildung einer Drehmomentübertragungseinrichtung mit einer verbesserten Geräuschisolierung bei verminderter Flächenpressung.

Die Aufgabe wird durch den Gegenstand des Anspruchs 1 gelöst. Die von diesem abhängigen Ansprüche geben vorteilhafte Ausführungsformen des Gegenstands des Anspruchs 1 wieder.

Die vorgeschlagene Drehmomentübertragungseinrichtung, insbesondere für einen Antriebsstrang eines Kraftfahrzeugs dient der Übertragung eines Drehmoments zwischen einer Brennkraftmaschine und einem Getriebe und kann als Drehschwingungsdämpfer, beispielsweise als Zweimassenschwungrad gegebenenfalls mit einem Fliehkraftpendel, als separates Fliehkraftpendel, als Kupplungsaggregat in Form einer Einfach- oder Doppelkupplung, eines hydrodynamischen Drehmomentwandlers oder dergleichen, als Elektromaschine mit einem an den Antriebsstrang ankoppelnden Rotor oder als Kombination dieser ausgebildet sein. Hierbei sind Bauteile oder Baueinheiten der Drehmomentübertragungseinrichtung mittels einer Steckverbindung verbunden.

Beispielsweise kann die Steckverbindung eine Schnittstelle zwischen einer motorseitigen, an der Kurbelwelle und einer getriebeseitigen, an einer Getriebeeingangswelle des Getriebes aufgenommenen Baueinheit der Drehmomentübertragungseinrichtung bilden. Diese Steckverbindung wird beispielsweise am Montageband des Kraftfahrzeugs bei der Verbindung von Brennkraftmaschine und Getriebe ausgebildet. Die Steckverbindung weist ein beispielsweise an einer Baueinheit angeordnetes Nabenteil mit einer Innenverzahnung und ein Wellenteil mit einer Außenverzahnung auf, welches an einem anderen mit diesem zu verbindenden Bauteil angeordnet ist. Hierbei bilden Innenverzahnung und Außenverzahnung die drehschlüssig wirksame Steckverbindung mit einem Zahnflankenspiel aus.

Das Zahnflankenspiel ist aus Gründen der Bauteiltoleranzen, zur Vereinfachung des Montagevorgangs beim Fügen der Steckverbindung ausgebildet. Zur Vermeidung oder zumindest Reduzierung von Geräuschen, die durch Anschlagen der Zahnflanken der Verzahnungen der Außen- und Innenverzahnung insbesondere bei vorhandenen Drehschwingungen, einer Umkehr der Drehmomentrichtung und dergleichen verursacht werden, sind Nabenteil und Wellenteil, insbesondere die Außen- und Innenverzahnung in Umfangsrichtung gegeneinander mittels einer aus Federdraht hergestellten Bogenspange gegeneinander vorgespannt.

In einer bevorzugten Ausführungsform ist die Vorspannung zwischen Naben- und Wellenteil innerhalb der Steckverbindung gebildet. Dies bedeutet, dass eine Vorspannung zwischen zumindest einem Zahn der Außenverzahnung, beispielsweise an dessen Zahnflanke und/oder an dessen Zahngrund, und zumindest einem Zahn der Innenverzahnung, beispielsweise an dessen Zahnflanke und/oder an dessen Zahngrund, vorgesehen sein kann. Es hat sich dabei als vorteilhaft erwiesen, wenn die Vorspannung jeweils endseitig an der Bogenspange ausgebildet ist, so dass zwei bevorzugt diametral entgegengesetzte Vorspanneingriffe zwischen Außen- und Innenverzahnung vorgesehen werden können.

Hierzu bildet die Bogenspange bevorzugt einen Bogen mit endseitig jeweils bezogen auf eine Drehachse der Drehmomentübertragungseinrichtung axial erweiterten beziehungsweise axial umgelegten Federbügeln, die jeweils einen Zahn der Außenverzahnung und einen Zahn der Innenverzahnung gegeneinander in Umfangsrichtung vorspannen.

Die Federbügel greifen dabei jeweils axial in die Steckverbindung ein und weisen entlang ihrer axialen Erstreckung zumindest einen Bogen auf. Dieser Bogen erstreckt sich zwischen den beiden Zähnen, beispielsweise zwischen einem Zahngrund und einer Zahnflanke. Durch die Ausbildung des Bogens stellt sich eine elastische Vorspannung der Außenverzahnung gegenüber der Innenverzahnung ein. Beispielsweise kann der Federbügel an einem Zahngrund der Innenverzahnung angelegt sein und in tangentiale und radiale Richtung mittels seines Bogens die gegenüberliegende Zahnflanke der Außenverzahnung vorspannen.

Um die Bogenspange insbesondere vor der Montage der beiden Baueinheiten mit dem Naben- und Wellenteil verliersicher auf dem Nabenteil aufzunehmen, kann die Bogenspange auf einem axial ausgerichteten Nabenflansch des Nabenteils bevorzugt vorgespannt aufgenommen sein. Hierbei ist der Radius des Bogens der nicht auf dem Nabenflansch montierten Bogenspange kleiner als der Radius des Nabenflanschs und wird unter Vorspannung bei dessen Montage auf dem Nabenflansch elastisch aufgeweitet. Alternativ oder zusätzlich kann der Nabenflansch teilweise oder umlaufend eine Ringnut aufweisen, in die der Bogen der Bogenspange eingelegt ist. Die Federbügel umgreifen dabei die Stirnseite des Nabenflanschs und erstrecken sich axial in die Innenverzahnung.

Zur verbesserten Fügung von Naben- und Wellenteil bei vormontierter Bogenspange kann an den Federbügeln, beispielsweise an den Bögen dieser und gegebenenfalls alternativ oder zusätzlich an der Stirnseite des Wellenteils eine Einfädelphase vorgesehen sein.

Um insbesondere bei engen Verzahnungen mit vielen kleinen über den Umfang angeordneten Zähnen kann zur Schaffung des notwendigen Bauraums in der Steckverbindung im Bereich der Federbügel jeweils ein Zahn der Innenverzahnung ausgenommen sein. Hierbei erstrecken sich die Federbügel in die freie Zahnlücke der Außenverzahnung.

Es versteht sich, dass die Steckverbindung neben der explizit beschriebenen Innen- und Außenverzahnung auch andere in Umfangsrichtung spielbehaftete, drehschlüssige und komplementär zueinander ausgebildete Profilierungen aufweisen kann, von denen jeweils ein Teil mittels der Bogenspange vorgespannt sein kann. In diesem Sinne sind derartige Profilierungen als Innen- und Außenverzahnungen zu verstehen. Es versteht sich weiterhin, dass in kinematischer Umkehr die Bogenspange auf dem Wellenteil vorgesehen sein kann.

Die Erfindung wird anhand des in den Figuren 1 bis 5 dargestellten Ausführungsbeispiels näher erläutert. Dabei zeigen:
Figur 1 eine ausschnittsweise dargestellte Drehmomentübertragungseinrichtung mit einem Wellenteil und einem Nabenteil,
Figur 2 die Drehmomentübertragungseinrichtung der Figur 1 in teilweiser Frontansicht,
Figur 3 das Nabenteil der Figuren 1 und 2 mit eingelegter Bogenspange in teilweiser 3D-Ansicht,
Figur 4 eine Detailansicht der Steckverbindung der Figuren 1 und 2
   und
Figur 5 die Bogenfeder der Figuren 1 bis 4 in 3D-Ansicht.

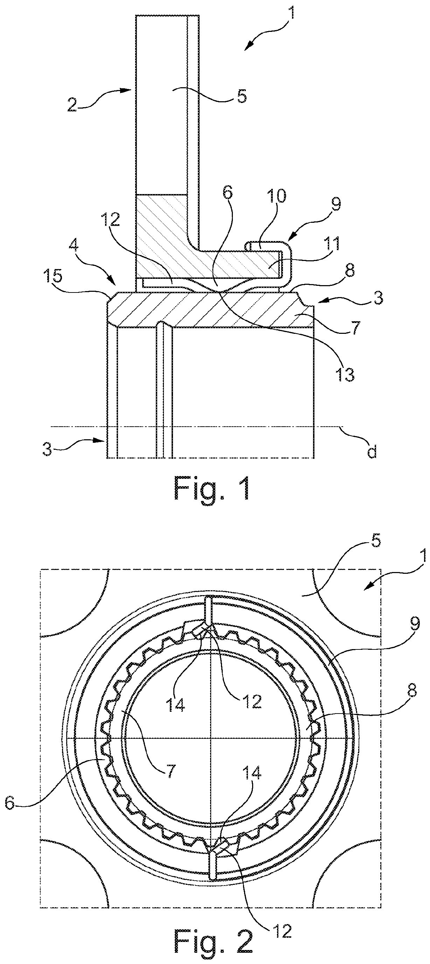

Die Figur 1 zeigt ausschnittsweise die Drehmomentübertragungseinrichtung 1 mit den nicht im Detail dargestellten Baueinheiten 2, 3 und der diese drehschlüssig verbindenden Steckverbindung 4. Die Baueinheit 2 kann beispielsweise als Drehschwingungsdämpfer oder dergleichen ausgebildet sein. Die Baueinheit 3 kann beispielsweise als nachgeschaltete Doppelkupplung oder dergleichen ausgebildet sein. Die Steckverbindung 4 dient hierbei der drehschlüssigen Verbindung der motorseitig an der Kurbelwelle einer Brennkraftmaschine aufgenommenen Baueinheit 2 mit der getriebeseitig aufgenommenen Baueinheit 3 während der sogenannten Hochzeit - also der Verbindung zwischen Brennkraftmaschine mit dem Getriebe - am Montageband eines Kraftfahrzeugs. Zur detaillierten Ausbildung von mit Steckverbindungen versehenen Drehmomentübertragungseinrichtungen wird auf den Stand der Technik, insbesondere die Druckschrift DE 10 2010 051 906 A1 verwiesen.

Die Baueinheit 2 besitzt als Ausgangsteil das Nabenteil 5 mit der Innenverzahnung 6. Die Baueinheit 3 besitzt als Eingangsteil das Wellenteil 7 mit der Außenverzahnung 8. Außenverzahnung 8 und Innenverzahnung 6 bilden die drehspielbehaftete Steckverbindung 4. Zur Vorspannung des Nabenteils 5 gegenüber dem Wellenteil 7 ist die Bogenspange 9 vorgesehen. Die Bogenspange 9 ist mit ihrem Bogen 10 um den Nabenflansch 11 vorgespannt gelegt und damit verliersicher an dem Nabenteil 5 aufgenommen. Die Bogenspange 9 umgreift den Nabenflansch 11 und weist bezogen auf die Drehachse d der Drehmomentübertragungseinrichtung 1 sich axial in die Steckverbindung 4 erstreckende Federbügel 12 auf. Die Federbügel 12 weisen tangential und radial nach innen erweiterte Bögen 13 auf, so dass die Federbügel 12 mittels der Bögen 13 die Innenverzahnung 6 und die Außenverzahnung 8 gegeneinander in Umfangsrichtung vorspannen. Die Stirnseite des Wellenteils 7 weist die Einfädelphase 15 auf, die den Fügevorgang unter elastischer Verformung der Bögen 13 zwischen Wellenteil 7 und Nabenteil 5 erleichtert.

Die Figur 2 zeigt die Drehmomentübertragungseinrichtung 1 der Figur 1 in Frontansicht mit dem Nabenteil 5 und dem Wellenteil 7 und der diese vorspannenden Bogenspange 9. Die endseitig an der Bogenspange 9 angeordneten Federbügel 12 erstrecken sich axial in Zahnlücken 14 der Außenverzahnung 8. Die Zahnlücken 14 sind durch Ausklinken eines Zahns der Innenverzahnung 6 gebildet.

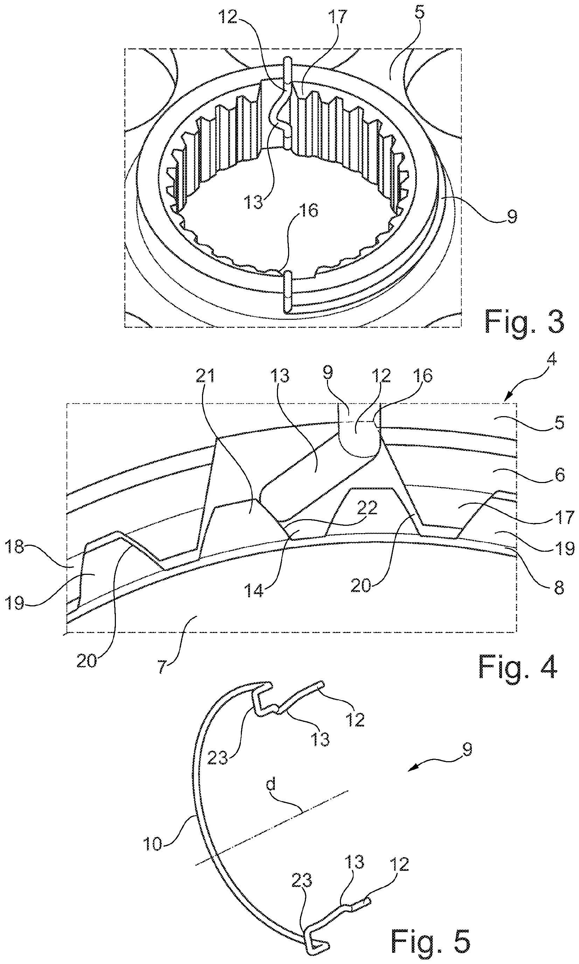

Figur 3 zeigt ausschnittsweise das Nabenteil 5 mit der Bogenspange 9 bei nicht gefügtem Wellenteil. Die Federbügel 12 sind an dem Zahngrund 16 des Zahns 17 angelegt. Die Bögen 13 heben in die Zahnlücke 14 (Figur 2) tangential und radial nach innen ab.

Die Figur 4 zeigt ein Detail der Steckverbindung 4 in Ansicht mit den Nabenteil 5 mit der Innenverzahnung 6 und dem Wellenteil 7 mit der Außenverzahnung 8 und der Bogenspange 9 mit dem in die Zahnlücke 14 der Außenverzahnung 8 eingreifenden Bogen 13 des Federbügels 12. Durch die elastische Ausbildung des tangential und radial nach innen ausgebildeten Bogens 13 verspannt der Federbügel 12 die Außenverzahnung 8 gegenüber der Innenverzahnung 6, so dass die Zähne 17, 18 der Innenverzahnung 6 gegen die Zähne 19 der Außenverzahnung 8 in Umfangsrichtung vorgespannt werden und damit der Freiheitsgrad des Zahnflankenspiels 20 zwischen den Zähnen 17,18 und den Zähnen 19 aufgehoben wird. Damit wird ein Anschlagen der Zähne 17, 18 und 19 gegeneinander und eine dadurch bedingte Geräuschbildung vermieden. Die Vorspannung erfolgt durch Ausbildung der gegensätzlichen Kräfte F₁, F₂ an dem sich zwischen dem Zahn 17 und dem Zahngrund 16 einerseits und andererseits an der Zahnflanke 22 des Zahns 21 abstützenden, elastischen, die Steifigkeit zur Ausbildung der Kräfte F₁, F₂ aufweisenden Bogens 13.

Figur 5 zeigt die Bogenspange 9 der vorhergehenden Figuren in 3D-Darstellung. Der die Federbügel 12 endseitig ausbildende Bogen 10 ist mit einem kleineren Durchmesser als der Durchmesser des Nabenflanschs 11 (Figur 1) versehen und wird unter Vorspannung auf diesem verliersicher aufgenommen. Die Bereiche 23 umgreifen den Nabenflansch 11 und weisen in axialer Erstreckung entlang der Drehachse d die Federbügel 12 auf. An den Federbügeln 12 sind in dieselbe Umfangsrichtung tangential und nach radial innen die Bögen 13 ausgebildet. Die Bogenspange 9 ist aus elastischem Federdraht mit beispielsweise 2 mm bis 4 mm, bevorzugt 3 mm Drahtstärke ausgebildet. Die Form der Bogenspange 9 kann dabei in ungehärtetem Zustand der Bogenspange ausgebildet sein. Anschließend kann die Bogenspange 9 gehärtet werden.

### Bezugszeichenliste

- 1: Drehmomentübertragungseinrichtung
- 2: Baueinheit
- 3: Baueinheit
- 4: Steckverbindung
- 5: Nabenteil
- 6: Innenverzahnung
- 7: Wellenteil
- 8: Außenverzahnung
- 9: Bogenspange
- 10: Bogen
- 11: Nabenflansch
- 12: Federbügel
- 13: Bogen
- 14: Zahnlücke
- 15: Einfädelphase
- 16: Zahngrund
- 17: Zahn
- 18: Zahn
- 19: Zahn
- 20: Zahnflankenspiel
- 21: Zahn
- 22: Zahnflanke
- 23: Bereich
- d: Drehachse
- F₁: Kraft
- F₂: Kraft

## Patentansprüche

1. Drehmomentübertragungseinrichtung (1), insbesondere für einen Antriebsstrang eines Kraftfahrzeugs mit einem eine Innenverzahnung (6) aufweisenden Nabenteil (5) und einem Wellenteil (7) mit einer Außenverzahnung (8), wobei Innenverzahnung (6) und Außenverzahnung (8) eine Steckverbindung (4) mit einem Drehschluss mit Zahnflankenspiel (20) bilden, und wobei Nabenteil (5) und Wellenteil (7) in Umfangsrichtung gegeneinander mittels einer aus Federdraht hergestellten Bogenspange (9) gegeneinander vorgespannt sind, **dadurch gekennzeichnet, dass** die Bogenspange (9) auf einem axial ausgerichteten Nabenflansch (11) des Nabenteils (5) aufgenommen ist.

2. Drehmomentübertragungseinrichtung (1) nach Anspruch 1, **dadurch gekennzeichnet, dass** die Vorspannung innerhalb der Steckverbindung (4) gebildet ist.

3. Drehmomentübertragungseinrichtung (1) nach Anspruch 2, **dadurch gekennzeichnet, dass** die Bogenspange (9) endseitig jeweils einen bezogen auf eine Drehachse (d) der Drehmomentübertragungseinrichtung (1) axial ausgerichteten Federbügel (12) aufweist und die Federbügel (12) jeweils einen Zahn (21) der Außenverzahnung (8) und einen Zahn (17) der Innenverzahnung (6) gegeneinander in Umfangsrichtung vorspannen.

4. Drehmomentübertragungseinrichtung (1) nach Anspruch 3, **dadurch gekennzeichnet, dass** die Federbügel (12) entlang ihrer axialen Erstreckung einen Bogen (13) aufweisen.

5. Drehmomentübertragungseinrichtung (1) nach Anspruch 4, **dadurch gekennzeichnet, dass** der Federbügel (12) an einem Zahngrund (16) der Innenverzahnung (6) angelegt ist und in tangentiale und radiale Richtung mittels seines Bogens (13) die gegenüberliegende Zahnflanke (22) der Außenverzahnung (8) vorspannt.

6. Drehmomentübertragungseinrichtung (1) nach einem der Ansprüche 1 bis 5, **dadurch gekennzeichnet, dass** die Federbügel (12) diametral gegenüber liegend an der Bogenspange (9) angeordnet sind.

7. Drehmomentübertragungseinrichtung (1) nach Anspruch 1, **dadurch gekennzeichnet, dass** vor einem Fügen der Steckverbindung (4) die Bogenspange (9) auf dem Nabenflansch (11) aufgenommen ist und eine Stirnseite des Wellenteils (7) eine Einfädelphase (15) aufweist.

8. Drehmomentübertragungseinrichtung (1) nach einem der Ansprüche 3 bis 7, **dadurch gekennzeichnet, dass** im Bereich der Federbügel (12) jeweils ein Zahn der Innenverzahnung (6) ausgeklinkt ist.

9. Drehmomentübertragungseinrichtung (1) nach Anspruch 8, **dadurch gekennzeichnet, dass** sich die Federbügel (12) in die freie Zahnlücke (14) der Außenverzahnung (8) erstrecken.

## Claims

1. Torque transmission device (1), in particular for a drive train of a motor vehicle having a hub part (5) which has an internal spline system (6) and a shaft part (7) with an external spline system (8), the internal spline system (6) and the external spline system (8) forming a push-in connection (4) with a rotationally locked connection with tooth flank play (20), and the hub part (5) and the shaft part (7) being prestressed against one another in the circumferential direction by means of an arcuate brace (9) which is produced from spring wire, **characterized in that** the arcuate brace (9) is received on an axially oriented hub flange (11) of the hub part (5).

2. Torque transmission device (1) according to Claim 1, **characterized in that** the prestress is formed within the push-in connection (4).

3. Torque transmission device (1) according to Claim 2, **characterized in that** the arcuate brace (9) has, on the end side, in each case one spring clip (12) which is oriented axially in relation to a rotational axis (d) of the torque transmission device (1), and the spring clips (12) in each case prestress a tooth (21) of the external spline system (8) and a tooth (17) of the internal spline system (6) against one another in the circumferential direction.

4. Torque transmission device (1) according to Claim 3, **characterized in that** the spring clips (12) have a curve (13) along their axial extent.

5. Torque transmission device (1) according to Claim 4, **characterized in that** the spring clip (12) is placed on a tooth base (16) of the internal spline system (6), and prestresses the opposite tooth flank (22) of the external spline system (8) in the tangential and radial direction by means of its curve (13).

6. Torque transmission device (1) according to one of Claims 1 to 5, **characterized in that** the spring clips (12) are arranged on the arcuate brace (9) so as to lie diametrically opposite one another.

7. Torque transmission device (1) according to Claim 1, **characterized in that**, before joining of the push-in connection (4), the arcuate brace (9) is received on the hub flange (11), and an end side of the shaft part (7) has a threading-in chamfer (15).

8. Torque transmission device (1) according to one of Claims 3 to 7, **characterized in that** in each case one tooth of the internal spline system (6) is removed in the region of the spring clips (12).

9. Torque transmission device (1) according to Claim 8, **characterized in that** the spring clips (12) extend into the free tooth gap (14) of the external spline system (8).

## Revendications

1. Dispositif de transmission de couple (1), destiné en particulier à une chaîne cinématique d'un véhicule automobile, le dispositif de transmission de couple comprenant une partie moyeu (5) pourvue d'une denture intérieure (6) et une partie arbre (7) pourvue d'une denture extérieure (8), la denture intérieure (6) et la denture extérieure (8) formant une liaison par engrènement (4) qui comporte un blocage en rotation pourvu d'un jeu (20) au niveau des flancs des dents, et la partie moyeu (5) et la partie arbre (7) étant précontraintes l'une contre l'autre dans la direction circonférentielle au moyen d'une agrafe incurvée (9) réalisée à partir d'un fil à ressort, **caractérisé en ce que** l'agrafe incurvée (9) est placée sur une bride de moyeu (11), orientée axialement, de la partie moyeu (5).

2. Dispositif de transmission de couple (1) selon la revendication 1, **caractérisé en ce que** la précontrainte est formée à l'intérieur de la liaison par engrènement (4).

3. Dispositif de transmission de couple (1) selon la revendication 2, **caractérisé en ce que** l'agrafe incurvée (9) comporte du côté extrémité une attache à ressort (12) orientée axialement par rapport à un axe de rotation (d) du dispositif de transmission de couple (1) et l'attache à ressort (12) précontraint une dent (21) de la denture extérieure (8) et une dent (17) de la denture intérieure (6) l'une contre l'autre dans la direction circonférentielle.

4. Dispositif de transmission de couple (1) selon la revendication 3, **caractérisé en ce que** l'attache à ressort (12) possède le long de son extension axiale une incurvation (13).

5. Dispositif de transmission de couple (1) selon la revendication 4, **caractérisé en ce que** l'attache à ressort (12) est appliquée sur une base de dent (16) de la denture intérieure (6) et précontraint le flanc de dent opposé (22) de la denture extérieure (8) dans une direction tangentielle et radiale au moyen de son incurvation (13).

6. Dispositif de transmission de couple (1) selon l'une des revendications 1 à 5, **caractérisé en ce que** l'attache à ressort (12) est disposée diamétralement à l'opposé de l'agrafe incurvée (9).

7. Dispositif de transmission de couple (1) selon la revendication 1, **caractérisé en ce que**, avant de réaliser une liaison par engrènement (4), l'agrafe incurvée (9) est reçue sur la bride de moyeu (11) et un côté d'extrémité de la partie arbre (7) comporte une phase d'insertion (15).

8. Dispositif de transmission de couple (1) selon l'une des revendications 3 à 7, **caractérisé en ce qu'**une dent de la denture interne (6) est entaillée au niveau de l'attache à ressort (12).

9. Dispositif de transmission de couple (1) selon la revendication 8, **caractérisé en ce que** l'attache à ressort (12) s'étend dans l'entredent libre (14) de la denture extérieure (8).
